Europäisches Patentamt

European Patent Office

Office européen des brevets

(19)

(11) Publication number: **0 448 082 A2**

# EUROPEAN PATENT APPLICATION

(12)

(21) Application number: 91104345.3

(51) Int. Cl.⁵: **C08F 6/12**

(22) Date of filing: **20.03.91**

(30) Priority: **22.03.90 IT 1977890**

(43) Date of publication of application:
**25.09.91 Bulletin 91/39**

(84) Designated Contracting States:
**AT BE CH DE DK ES FR GB GR LI NL SE**

(71) Applicant: **ISTITUTO GUIDO DONEGANI S.p.A.**
**4, Via Fauser**
**I-28100 Novara(IT)**

(72) Inventor: **Cinquina, Patrizia, Dr.**
**289, Viale G. Cesare**
**I-28100 Novara(IT)**
Inventor: **Triulzi, Giangaleazzo**
**15, Via L. Spallanzani**
**I-20129 Milan(IT)**
Inventor: **Garbassi, Fabio, Dr.**
**6, Via C. Porta**
**I-28100 Novara(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40(DE)**

(54) **Method for the continuous fractionation of polymers and apparatus therefor.**

(57) Described is a method for the continuous fractionation of polymers dissolved in a solvent, which comprises at least one complete cycle of the following operations:

(a) precipitation of a first fraction of polymer inside a first reaction vessel containing the solution;

(b) transferring the remaining solution into a second reaction vessel and collecting said first fraction of polymer precipitated in said first reaction vessel;

(c) precipitation of a second fraction of polymer inside said second reaction vessel; and

(d) recycling the remaining solution to said first reaction vessel and collecting said second fraction of polymer precipitated in said second reaction vessel.

EP 0 448 082 A2

The present invention relates to a method for the continuous fractionation of polymers.

More specifically, the present invention provides a method for the continuous fractionation of polymers and an apparatus for carrying out said method.

The fractionation of a polymer means separating different types of molecules, using experimental techniques suitable for obtaining homogeneous fractions of molecules having a similar molecular weight and structure, and also a similar composition in the case of copolymers and terpolymers.

Until now, problems related to the fractionation of homopolymers have mainly been concentrated on in that the type of heterogeneity under examination predominantly related to variations in molecular weight and, possibly, microstructure due to the occasional presence of chain branches of varying lengths. In this respect, the fractionation of homopolymers has provided important information for interpreting polymerization mechanisms and kinetics such as, for example, variations in kinetic parameters as a function of yield. It has also been extremely useful for determining molecular weight distributions and the effect thereof on the main physical and physico-mechanical properties of the polymer such as stress resistance, elongation, melting point etc.

However, as a large part of industrial polymers consists of copolymers and terpolymers, it is obvious that said fractionation techniques should be extended to polymers whose heterogeneity is not only of molecular nature but also is due to variations in composition and microstructure.

One method for determining the molecular weight distribution of polymers is described in US-A-4,674,323 and 4,775,943 where the polymer fractionation is mainly based on size-exclusion chromatography (SEC).

The method described in these patents, however, has the drawback of not being applicable on a large scale and, consequently, cannot provide a sufficient amount of the individual fractions for carrying out further analyses.

DE-A-32 42 130 describes a method for determining the molecular weight distribution of polymers which overcomes the above drawbacks. This method is mainly based on the principle of countercurrent extraction using solvents which exhibit miscibility gaps with the polymer to be treated.

However, even this method has its shortcomings in that it requires large quantities of solvent, poses problems with respect to the determination of the solvent/polymer combinations that afford a good fractionation and only works with the countercurrent extraction technique, i.e., does not allow the use of alternative techniques.

One object of the present invention is to provide a method for the continuous fractionation of homo- and copolymers, and also multicomponent polymers, which does not show the drawbacks of the existing methods, with which all the sequences of the analysis can automatically be carried out following predetermined programs which can be established by the research team and which, therefore, can be implemented without requiring the presence of an operator.

It has surprisingly been found that this and other objects can be achieved by means of a method for the continuous fractionation of polymers dissolved in a solvent, which includes at least one cycle of the following operations:

(a) precipitation of a first fraction of polymer inside a first reaction vessel containing the solution;

(b) transferring the remaining solution into a second reaction vessel and collecting the above first fraction of polymer precipitated in the above first reaction vessel;

(c) precipitation of a second fraction of polymer inside the second reaction vessel; and

(d) recycling the remaining solution in the first reaction vessel and collecting the above second fraction of polymer precipitated in the above second reaction vessel.

Any polymer which is soluble in a solvent may be used in the fractionation method of the present invention. Examples thereof include polyolefins such as high, medium or low density polyethylene, polypropylene, copolymers of ethylene and propylene, copolymers of ethylene and vinyl acetate, poly(iso)-butene, polyvinylchloride, polystyrene, styrene-acrylonitrile resins, polybutadiene and ABS resins, acrylic resins such as polymethyl methacrylate (PMMA), imides of polymethyl methacrylate, and copolymers of methyl methacrylate with styrene and/or ($C_1$-$C_5$-)alkyl acrylates, polycarbonate, polystyrene-PMMA mixtures, copolymers of styrene and butadiene, maleic anhydride and methyl methacrylate, ethylene oxide and caprolactone, ethylene-propylene-cyclopentadiene terpolymers etc..

Similarly, any organic or inorganic solvent normally used, for example, for the determination of the inherent or intrinsic viscosity of polymers may be used in the present invention. Examples of suitable solvents are diphenylmethane, alpha-chloronaphthalene, dioxane, decalin, dimethylformamide, acetonitrile, chloroform, cyclohexane, acetone, dimethylsulfoxide, methylethylketone, etc. and, normally, also n-alkanes, alcohols and aromatic hydrocarbons.

In accordance with the method of the present invention, the number of cycles from (a) to (d) depends

2

on the number of polymeric fractions to be collected and, above all, on the molecular weight distribution of the polymer.

At the end of the fractionation procedure, the solution should preferably, but not necessarily, consist of a solvent containing only a small quantity of dissolved polymer. The total amount of polymer collected is generally more than 95%.

Bearing in mind that each cycle affords two fractions and that these fractions also depend on the type of polymer and solvent used, from 5 to 10 cycles are usually preferred for the method of the present invention.

The polymer may be dissolved in the solvent in a separate container or, more conveniently, in one of the two reaction vessels.

The amount of polymer dissolved is preferably such as to give very dilute solutions which generally have a concentration of from 0.5 to 2.5% by weight.

Once the polymer has been totally dissolved, the fractionation cycles start and the polymer is partially and gradually precipitated to yield individual and separate fractions.

Any technique which allows the precipitation of a polymer in a solution may be used in the present method although it is preferred to make use of a temperature gradient and/or to add a precipitant.

Once the desired amount of polymeric fraction has been precipitated the solution is brought back to its equilibrium conditions by discontinuing the addition of the precipitant and/or by keeping the temperature constant at the new phase de-mixing temperature.

The collection of the polymer fraction may also be carried out according to any technique known to those skilled in the art. One of these techniques comprises deposition of the precipitated polymer fraction on the bottom of a reaction vessel, after the solution has been discharged. The polymer fraction is then collected from the reaction vessel by charging the vessel with fresh solvent in an amount sufficient to allow the precipitated fraction to redissolve.

The resulting solution is discharged from the reaction vessel, for example by allowing it to flow freely into a vessel from which the polymer fraction is again collected either by adding a precipitant or by evaporating the solvent.

This recovery technique is preferred in that it makes it possible to carry out the whole fractionation operation automatically.

In fact, while one precipitated polymer fraction is recovered from the bottom of one reaction vessel, another polymer fraction is precipitated from the starting solution in the other reaction vessel.

The quantity of fresh solvent, used only for the recovery of the polymer fraction deposited on the bottom of one of the two reaction vessels, depends not only on the polymer under examination but also on the type and amount of fraction to be recovered. However, the amount of fresh solvent for each recovery usually is in the range of from 10 to 30% of the total quantity of the starting solution.

To obtain a desired quantity of polymer fraction in any one of the operations (a) and (c), the precipitation of the polymer is stopped, e.g., when the solution has reached a predetermined degree of turbidity.

The exact determination of the turbidity of the solution is preferably carried out by immersion of an optical probe capable of resisting a possible corrosive action of the solvent and of operating in a temperature range of from -20 to 200° C.

The method of the present invention can be carried out with an apparatus for the continuous fractionation of polymers, which comprises:

(i) two fractionation reaction vessels suitable for holding a polymer solution, equipped with an external jacket for the circulation of a heating or cooling fluid, a stirrer, a thermometer and, optionally, an immersable optical probe;

(ii) suitable means for transferring the solution from one reaction vessel to the other;

(iii) at least one solvent tank and, optionally, a tank for a non-solvent; and

(iv) at least two vessels for the recovered polymer fractions coming from the fractionation reactors.

The fractionation reactors are preferably cone-shaped and have a volume which depends on the amount of solution treated. However, for laboratory purposes, volumes of from 1 to 5 litres are usually most convenient. For industrial applications, such as pilot plants, there should be a scale-up as required.

The immersable optical probe may, for instance, comprise a cylindrical stainless steel probe externally lined with protective material (such as polytetrafluoroethylene) which is equipped with a calibrated slit near one of its ends, said slit containing two overlapping water-tight lenses.

At the bottom of the probe, immediately under the slit, there is an optical corner-cube, whereas at the other end there is a beam splitter and a reflecting mirror. The optical probe also includes a laser which emits radiation having a wavelength of 670 nm and a reference system with two amplifiers for identical signals, capable of receiving and comparing two light-beams.

When in operation, the probe is immersed in the solution in a way such that the slit is covered by the liquid. The laser beam is directed against the beam splitter which divides it into two beams, i.e., a first reference beam which proceeds along its original course and, after amplification, reaches the reference system and a second measurement beam which is deviated along the probe, reflected back at the bottom thereof and is finally deviated by the reflecting mirror to the amplifier and then to the reference system.

During its descent and ascent along the probe, the laser beam passes through the two water-tight lenses and then through the polymer solution present in the slit of the probe.

When the polymer solution starts to become turbid, the intensity of the measurement laser beam decreases. This decrease is registered by the reference system which, by continuous comparison with the intensity of the reference laser beam, is able to automatically stop the precipitation of the polymer fraction at the desired moment.

Equipment suitable for recycling the solution may, e.g., mainly consist of a pump and a pipe which connects the bottom parts of the two reaction vessels (if the fractionated polymer has a density lower than that of the solvent) or the upper parts thereof (if the density of the polymer exceeds that of the solvent).

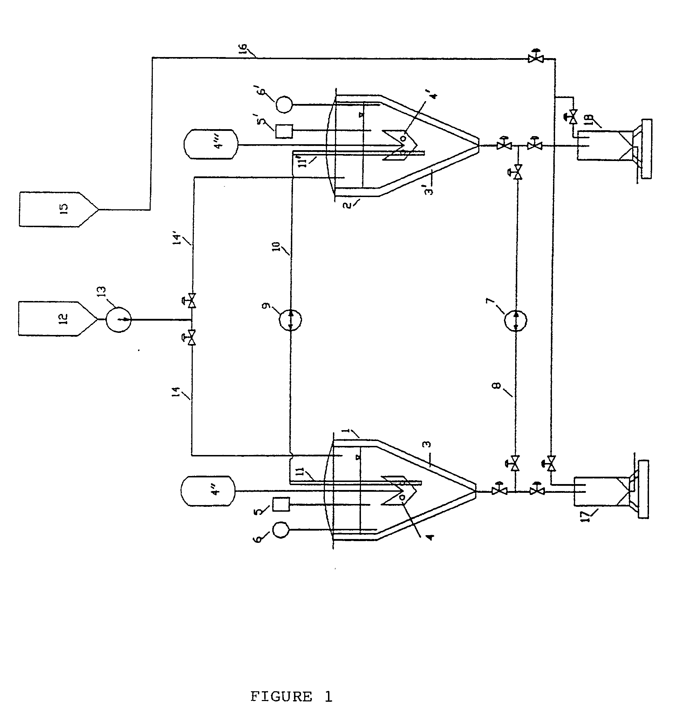

The structural and functional characteristics of the equipment for the continuous fractionation of polymers, as described in the present invention, can be better understood from the detailed description which follows and in which reference is made to the enclosed figure which schematically represents the above as an example, but without limiting it in any way.

With reference to the figure, an apparatus for the continuous fractionation of polymers, as described in the present invention, includes two fractionation reaction vessels (1) and (2), each equipped with an external jacket (3), (3'), a stirrer (4), (4') driven by motor (4''), (4'''), a thermometer (5), (5'), and an immersable optical probe (6), (6').

The apparatus also includes a pump (7) and a pipe (8) which are used only for the fractionation of a polymer having a density which is lower than that of the solvent and which consequently tends to float, and a pump (9) and a pipe (10) connected by a pair of aspiration nozzles (11), (11'), which operate only when the density of the polymer is higher than that of the solvent and the polymer consequently tends to be deposited on the bottom of the vessels.

A tank for the solvent (12) connected to the two reaction vessels by means of a pump (13) and pipes (14) and (14'), and a tank (15) for a non-solvent connected through a pipe (16) to the two collecting vessels (17) and (18), complete the apparatus suitable for carrying out the method of the present invention.

The above description and enclosed drawing adequately illustrate the operation of the apparatus.

One of the two reaction vessels, for example reactor (1), is filled with the solvent transferred from the tank (12) by means of pump (13) and pipe (14). As the polymer is placed into the reactor, using a method which is not shown in the drawing, the solvent is continuously stirred and, if necessary, a heating fluid circulates inside the jacket (3) to facilitate the dissolution.

This operation is followed by the fractionation and separation occurs, in this case, by decreasing the temperature. For this purpose a cooling liquid circulates in the jacket (3) which decreases the temperature of the solution. The polymer fraction having the higher molecular weight begins to precipitate and when the immersable optical probe (6) indicates an increase in the turbidity of the solution, the stirrer (4) is stopped by turning off motor (4'') and the temperature of the solution is kept constant at its new equilibrium value.

The precipitated polymer fraction either sinks to the bottom of the reactor or rises to the surface of the solution, depending on its density. In the first case, the remaining solution is transferred into reactor (2) by means of suction from above using aspiration nozzle (11), pump (9) and pipe (10) or, in the second case, the solution is transferred into reactor (2) from the bottom of reactor (1) by means of pump (7) and pipe (8). In both cases the precipitated fraction remains on the bottom of reactor (1).

While a second polymeric fraction is precipitated in reactor (2) by further lowering the temperature of the solution, the polymer fraction which has already been precipitated is collected in reactor (1). For this purpose, fresh solvent is poured from tank (12) into reactor (1) in an amount sufficient to dissolve the polymer fraction and the resulting solution is then transferred to vessel (17).

The examined fraction is collected from this vessel by causing it to precipitate again with the non-solvent conveyed from tank (15) by pipe (16).

As soon as the solution has been transferred from reactor (1) to vessel (17), reactor (1) is ready to receive the solution recycled from reactor (2).

After each transfer from one reactor to another, the pipes (8) or (10) and the pumps (7) or (9) are washed with solvents, either the same or different from those previously used, and thereafter are dried by an inert gas (e.g. nitrogen).

When the present invention is practiced, many parts of the equipment for the continuous fractionation of

4

polymers as shown in the enclosed figure for exemplifying purposes, may apparently undergo changes or modifications. For example, one of the modifications could consist of a connection from pipe (16) to the reactors (1) and (2), to achieve the fractionation, at a constant temperature, by adding predetermined amounts of non-solvent from tank (15).

The following examples are to further illustrate the present invention without limiting it in any way.

EXAMPLE 1

A copolymer of ethylene and propylene (available from Chemische Werke Hüls under the tradename BUNA® AP 301) was fractionated.

The equipment used was that shown in the enclosed figure using fractionation reaction vessels having a capacity of 2 litres.

The solvent used was diphenylmethane and the solution had an initial concentration of 1% of copolymer.

Before the polymer was dissolved at 160°C, 0.1% by weight of stabilizing mixture (composed of equal parts of Irganox® 1076 and Irganox® 1010) was added to the solvent. The fractions were collected by gradually lowering the temperature.

The solution, under a nitrogen atmosphere, was steadily stirred and stirring was discontinued only for the time necessary to collect the fraction.

The number of fractions collected and the molecular weight distribution are listed in Table 1.

## TABLE 1

### $C_2$-$C_3$ Copolymer BUNA® AP 301
### Fractionation with Temperature Gradient

| Frac. | T (°C) | % b.w. | $\overline{M}w(*10^{-3})$ | MWD | % $C_3$(g) | $[\eta]$ (dl/g) |
|---|---|---|---|---|---|---|
| BUNA AP 301 | - | - | 220 | 2,6 | 43,8 | 1,80 |
| 1 | 120 | 18,10 | 360 | 2,5 | 42,6 | 2,67 |
| 2 | 117 | 18,50 | 250 | 2,3 | 44,4 | 2,30 |
| 3 | 114 | 6,00 | 240 | 1,6 | 43,4 | 2,07 |
| 4 | 112 | 9,90 | 196 | 1,8 | 43,8 | 1,70 |
| 5 | 110 | 6,20 | 174 | 1,6 | 44,0 | 1,52 |
| 6 | 106 | 8,00 | 153 | 1,3 | 44,0 | 1,27 |
| 7 | 95 | 14,00 | 114 | 1,4 | 43,3 | 1,07 |
| 8 | 90 | 4,50 | 82 | 1,4 | 42,9 | 0,92 |
| 9 | 80 | 2,30 | 67 | 1,6 | 42,2 | 0,76 |
| 10 | 70 | 1,90 | 44 | 1,5 | 44,2 | 0,61 |
| 11 | 25 | 2,10 | 22 | 2,5 | n.d | n.d |

$\overline{M}w$ = weight average molecular weight (calculated by means of the Scholte method)

MWD = degree of polydispersion ($\overline{M}w/\overline{M}n$ where $\overline{M}n$ is the number average molecular weight)

%$C_3$ = amount of polypropylene present (infrared analysis)

$[\eta]$ = intrinsic viscosity of the polymer

n.d. = not determined

EXAMPLE 2

A polymethylmethacrylate polymer (Vedril® 9D of Vedril SpA, Milan) was fractionated after conversion thereof to an imide by reacting it with methylamine at a temperature of 235°C, a pressure of 35 atmospheres and in a 90/10 solvent mixture of toluene/methanol.

The equipment used was that shown in the enclosed figure, modified by a connection from pipe (16) to the reaction vessels (1) and (2) having a capacity of 2 litres.

15.252 grams of polymer and 1 litre of solvent (1,4-dioxane) were used for the fractionation.

The fractions were collected by adding a non-solvent (n-heptane) at a constant temperature (T = 30°C).

Table 2 shows the number of fractions collected, the volume of non-solvent added and the characteristics of each fraction.

### TABLE 2

### Imide of polymethylmethacrylate

### Fractionation by adding non-solvent

| Frac. | Vol. (ml) | m(g) | $[\eta]$ (dl/g) | MWD |
|---|---|---|---|---|
| PMMA | - | - | 0.42 | 1.38 |
| 1 | 480 | 0.7008 | 0.71 | 1.53 |
| 2 | 70 | 0.6296 | 0.64 | 1.60 |
| 3 | 20 | 0.8952 | 0.54 | 1.58 |
| 4 | 10 | 1.8764 | 0.52 | 1.35 |
| 5 | 30 | 2.5847 | 0.46 | 1.32 |
| 6 | 50 | 3.0014 | 0.36 | 1.17 |
| 7 | 75 | 1.8104 | 0.33 | 1.20 |
| 8 | 50 | 0.7199 | 0.26 | 1.17 |
| 9 | 100 | 1.2453 | 0.24 | 1.18 |
| 10 | 260 | 1.3093 | 0.18 | 1.28 |
| 11 | 600 | 0.2451 | - | 2.09 |

**Claims**

1. Method for the continuous fractionation of polymers dissolved in a solvent, comprising at least one complete cycle of the following operations (a) to (d):
   (a) precipitation of a first fraction of polymer inside a first reaction vessel containing the solution;
   (b) transferring the remaining solution into a second reaction vessel and collecting said first fraction of polymer precipitated in said first reaction vessel;
   (c) precipitation of a second fraction of polymer inside said second reaction vessel; and
   (d) recycling the remaining solution to the first reaction vessel and collecting said second fraction of polymer precipitated in said second reaction vessel.

2. Method according to claim 1, wherein the number of cycles is from 5 to 10.

3. Method according to any one of claims 1 and 2, wherein the solution has an initial concentration of from 0.5 to 2.5% by weight.

4. Method according to any one of the preceding claims, wherein the polymer is precipitated by means of a decrease in temperature or by adding a precipitant.

5. Method according to any one of the preceding claims, wherein a desired amount of polymer fraction, in any one of the operations (a) and (c), is obtained by discontinuing the precipitation of the polymer when the turbidity of the solution has reached a predetermined value.

6. Method according to claim 5, wherein the turbidity of the solution is measured by means of an immersable optical probe, capable of operating within a temperature range of from -20 to 200° C.

7. Apparatus for the continuous fractionation of polymers, comprising:
   (i) two fractionation reaction vessels suitable for holding a polymer solution, equipped with an external jacket for the circulation of a heating or cooling fluid, a stirrer, a thermometer and, optionally, an immersable optical probe;
   (ii) means for transferring the solution from one reaction vessel to the other;
   (iii) at least one solvent tank and, optionally, a tank for a non-solvent; and
   (iv) at least two vessels for the recovered polymer fractions coming from the fractionation reactors.

8. Apparatus according to claim 7, wherein the fractionation reaction vessels are cone-shaped and have a volume of from 1 to 5 litres.

9. Apparatus according to any one of claims 7 and 8, wherein the means (ii) comprise a pump and a pipe.

FIGURE 1